# EUROPEAN PATENT APPLICATION

(11) **EP 2 282 025 A2**
(43) Date of publication of application: **09.02.2011**
(21) Application number: 09734618.3
(22) Date of filing: 23.04.2009
(51) Int. Cl.: F01N 3/18

(54) **EXHAUST-GAS REDUCING DEVICE, AND A CONTROL METHOD THEREFOR**

(30) Priority: 23.04.2008 KR 20080037876
(71) Applicant: SK Energy Co., Ltd., Seoul 110-110 (KR)
(72) Inventor: LEE, Changq, Daejeon 302-981 (KR); KIM, Yongwoo, Daejeon 305-729 (KR); KIM, Youngshol, Daejeon 300-717 (KR); PARK, Haejin, Daejeon 305-761 (KR)
(74) Representative: Banzer, Hans-Jörg
(86) International application number: PCT/KR2009/002128
(87) International publication number: WO 2009/131390

(57) **Abstract**

The present invention relates to an exhaust gas-aftertreatment device and a control method thereof. More specifically, the invention relates to an exhaust gas-aftertreatment device, which employs a burner and a metal filter, so that the filter can be regenerated within a short time at high temperature, and wherein the burner is operated when the vehicle is idling, and wherein the filter can be efficiently regenerated by forming a flame in a stable manner using a dispersion means, and which furthermore has enhanced durability, and to a method for controlling the same.

## Description

### [Technical Field]

The present invention relates to an exhaust gas-aftertreatment device and a control method thereof, and more particularly to an exhaust gas-aftertreatment device, which employs a burner and a metal filter, so that the filter can be regenerated within a short time at high temperature, and wherein the burner is operated when the vehicle is idling, and wherein the filter can be efficiently regenerated by forming a flame in a stable manner using a dispersion means, and which furthermore has enhanced durability, and to a method for controlling the same.

### [Background Art]

Diesel engines allow fuel consumption to be reduced while having high power output compared to gasoline engines. Diesel engines are therefore mainly used in large vehicles and are also increasingly being used in light duty vehicles.

However, diesel engines use 4-stroke engines in which fuel is injected and burned by compression ignition, so that imperfect combustion occurs due to the non-uniform distribution of fuel and air during the auto-ignition of fuel and noxious particulates (smoke) are generated.

The noxious particulates are mainly nitrogen oxide (NOx), particulate matter (PM), and soot, and there are reports that noxious particulates caused by diesel vehicles account for 40% of the total amount of air pollution. For this reason, many countries regulate the emission of particulates, and to be in compliance with these regulations, particulate reduction systems that are inserted in exhaust pipes in order to reduce particulates have been reported.

The particulate reduction systems can be broadly classified into: a passive-regeneration system that traps particulates by a catalytic filter and catalytically oxidizes the trapped particulates at a given temperature or higher; and an active-regeneration system that forcibly increases the temperature of particulates using an external heat source.

The passive-regeneration particulate reduction system is problematic in that the passive regeneration of the filter by the catalyst is difficult in low-speed zones such as traffic jam zones, because the temperature of particulates is reduced in such zones.

In particular, the passive-regeneration particulate reduction system is difficult to apply to vehicles that idle a lot, such as cleaning vehicles or low-speed buses in the city or other places with congested traffic. If it uses low-sulfur diesel (LSD) or high-sulfur diesel (HSD) as fuel, sulfates which are very harmful to the human body will be produced, and for this reason, only ultra-low-sulfur diesel (ULSDP) needs to be used.

Moreover, if the catalyst does not perform its function, the exhaust back pressure of the engine will be increased to reduce the power output and increase the consumption of fuel, and if this phenomenon continues, not only the filter, but also the engine, will be damaged.

Meanwhile, the active-regeneration particulate reduction system includes, in addition to the passive-regeneration system with the catalytic filter, an electric heater, a plasma burner, etc.

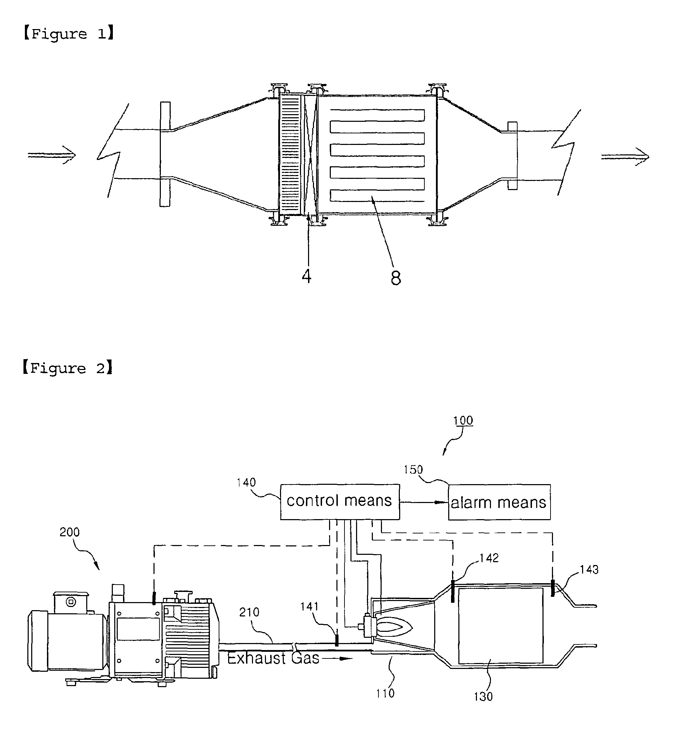

As an example of using the electric heater, Korean Patent Laid-Open Publication No. 2004-68792 discloses a diesel engine particulate reduction system as shown in FIG. 1.

The diesel engine particulate reduction system shown in FIG. 1 serves to regenerate particulates using a catalyst in order to reduce particulates. In the diesel engine particulate reduction system, at least one of electric heaters 4 that can spatially unevenly distribute heat is coupled with a catalytic unit 8 in order to promote catalytic activation or NO-to-NO₂ conversion efficiency in low-temperature ranges.

The diesel engine particulate reduction system shown in FIG. 1 is provided with the electric heaters that activate the catalytic reaction such that the passive regeneration of the filter smoothly occurs. However, because it requires a battery of significantly large capacity to increase the temperature of particulates, it is difficult to apply in practice. Also, because it needs to be provided with separate devices, it is large in size and complex in structure, and thus has low economic efficiency.

As another example of the active-generation system, a plasma reactor was proposed. However, the plasma reactor is expensive, increasing the total cost of production, and it requires a very high voltage of 100,000 volts to generate plasma, such that a large-capacity, complex converter for inducing the plasma-generating voltage is required in vehicles that are operated at 12 or 24 volts. Also, the plasma reactor is difficult to maintain, because routine cleaning is required to prevent the contamination of the ignition unit, and repair for the same reason. In addition, there is a problem in that the plasma reactor is difficult to use commercially.

As still another example of the active-regeneration system, a burner that generates a flame using diesel fuel as a raw material can increase the efficiency with which exhaust gases are reduced by completely combusting the fuel. However, it uses a flame while the vehicle is running, and thus if a flammable material is located in the vicinity thereof, there will be a risk of explosion or the like. In addition, there is a problem in that it is difficult to form a stable flame, because the flow rate and temperature of exhaust gas change in a complex manner depending on the running pattern of the vehicle.

### [Disclosure]

### [Technical Problem]

The present invention has been made in order to solve the above-described problems occurring in the prior art, and it is an object of the present invention to provide an exhaust gas-aftertreatment device, which employs a burner and a metal filter, so that the filter can be regenerated within a short time at high temperature, wherein the burner is operated when the vehicle is in the idling state, so as to perform the active regeneration of the filter in a stable manner without a risk factor, thereby increasing exhaust gas reduction efficiency and safety, and which furthermore can be applied in all vehicles without regard to the kind, displacement, running pattern and the like of an engine, and to a method for controlling the same.

Another object of the present invention is to provide an exhaust gas-aftertreatment device which has a dispersion means that enables the efficiency of filter regeneration to be increased by effectively mixing fuel with exhaust gas, and which allows the durability and reliability of the filter to be improved upon by using a metal filter made of Fecalloy having good thermal conductivity so as to prevent the filter from being damaged by cracking or melting.

### [Technical Solution]

To achieve the above object, in one aspect, the present invention provides an exhaust gas-aftertreatment device for reducing exhaust gas emitted from a diesel engine, comprising: a body which has, on one outer side, an exhaust gas inlet connected with an exhaust pipe to introduce the exhaust gas into the system, and on the other side, an exhaust gas outlet for emitting purified exhaust gas; a burner including a fuel injection means, placed adjacent to the exhaust gas inlet of the body and having a nozzle section provided at the end thereof to inject atomized fuel, an ignition means for igniting the injected fuel, and a dispersion means for guiding the fuel injected through the fuel injection means and the exhaust gas introduced through the exhaust gas inlet to a metal filter; the metal filter provided at the rear end of the burner to burn organic or particulate matter in the exhaust gas; and a control means for controlling the operation of the burner and determining the state of the system.

In the exhaust gas-aftertreatment device of the present invention, the metal filter is preferably made of Fecalloy. Also, the surface of the metal filter is preferably heat-treated. The heat treatment of the surface is preferably carried out in an air atmosphere at a temperature of 900 to 1000 °C to form an aluminum oxide film on the surface.

Also, the dispersion means is preferably formed such that the diameter thereof becomes wider from the fuel injection means in a direction of the metal filter, and a plurality of openings are preferably formed in the dispersion means such that the exhaust gas introduced through the exhaust gas inlet goes through the openings to the inside of the dispersion means and effectively mixes with the fuel in the dispersion means and a flame is formed in a stable manner. Herein, the openings are preferably formed at an angle in the tangential direction of the dispersion means, such that the exhaust gas that went through the openings into the dispersion means has a specific flow pattern.

Moreover, the exhaust gas-aftertreatment device preferably further comprises an air injection means for injecting air into the nozzle section of the fuel injection means.

Furthermore, the control means serves to determine the state of the system with a pressure sensor located at the front end of the exhaust gas-aftertreatment device or the metal filter, temperature sensors and for measuring the temperatures of the front and rear ends of the metal filter, RPM sensor of the engine, or GPS (Global Positioning System) information. Also, the exhaust gas-aftertreatment device preferably further comprises an alarm means for notifying of a sensed system state or emergency determined by the control means.

In another aspect, the present invention provides a method for controlling the above-described exhaust gas-aftertreatment device, the method comprising: an active regeneration-determining step for determining whether operation of the burner is required, after operation of the engine; an alarm signal-transmitting step for notifying an alarm signal to a vehicle driver with an alarm means, if it is determined in the active regeneration-determining step that the operation of the burner is required; an idling state-determining step for determining whether the vehicle is in an idling state, after the alarm signal-transmitting step; an active regeneration step for operating the burner to perform active regeneration, if it is determined in the idling state-determining step that the vehicle is in the idling state and if the user's instruction to do regeneration operationis input; and an active regeneration end step of stopping the operation of the burner to end the active regeneration, after performing the active regeneration step.

In the inventive method for controlling the exhaust gas-aftertreatment device, preferably, it is determined in the active regeneration-determining step that, if a pressure measured by a pressure sensor is higher than a first pressure criteria or if an average pressure measured by the pressure sensor for a specific period of time is higher than a second pressure, the burner should be operated. Herein, the first pressure criteria is preferably 150-250 mbar, and the second pressure is preferably 75-150 mbar.

Moreover, the inventive method for controlling the exhaust gas-aftertreatment device preferably further comprises a system state-checking step for checking the state of the system after the operation of the engine. Furthermore, when the engine is operated after the active regeneration end step, the active regeneration-determining step is performed again. In addition, preferably, the amount of fuel injected into the burner in the active regeneration step is controlled such that the temperature of the front end of the metal filter is in the range of 600 to 900 °C.

### [Advantageous Effects]

According to the exhaust gas-aftertreatment device of the present invention and the method for controlling the exhaust gas-aftertreatment device, the burner and the metal filter are used together, and the dispersion means mixes the fuel and the exhaust gas with each other, so that a flame is formed in a stable manner. Thus, the filter can be regenerated within a short time by burning particulates. Also, the metal filter is made of Fecalloly having good thermal conductivity, and thus damage to the filter caused by cracking or melting, which has often occurred in the prior ceramic filters, can be prevented, thereby improving the durability and reliability of the filter.

Moreover, according to the exhaust gas-aftertreatment device of the present invention and the method for controlling the exhaust gas-aftertreatment device, the burner is operated while a vehicle is in the idling state, whereby the active regeneration of the filter can be performed in a stable manner when it is required, thereby increasing the efficiency of exhaust gas reduction. In addition, safety can be enhanced by eliminating external risk factors, and the system and method of the present invention can be applied in all vehicles without regard to the kind, displacement and running pattern of an engine.

### [Description of Drawings]

FIG. 1 is a schematic diagram showing an exhaust gas-aftertreatment device according to the prior art.
FIG. 2 is a schematic diagram showing an exhaust gas-aftertreatment device according to the present invention.
FIG. 3 shows a burner of the exhaust gas-aftertreatment device shown in FIG. 2.
FIG. 4 is an A-A' cross-sectional view of FIG. 3.
FIG. 5 shows another burner of the exhaust gas-aftertreatment device according to the present invention.
FIG. 6 is a schematic view showing the flow of fuel and exhaust gas in the exhaust gas-aftertreatment device according to the present invention.
FIG. 7 is a schematic diagram showing a method for controlling the exhaust gas-aftertreatment device according to the present invention.
FIG. 8 is a graph showing the temperature and pressure of exhaust gas in the exhaust gas-aftertreatment device according to the present invention.
FIG. 9 is a schematic diagram showing another method for controlling the exhaust gas-aftertreatment device according to the present invention.
FIG. 10 is a schematic diagram showing still another method for controlling the exhaust gas-aftertreatment device according to the present invention.

### <Description of main reference numerals used in the drawings>

100: exhaust gas-aftertreatment device; 110: body; 111: exhaust gas inlet; 112: exhaust gas outlet; 120: burner; 121: fuel injection means; 122: nozzle section; 123: ignition means; 124: dispersion means; 125: openings; 126: air injection means; 130: metal filter; 140: control means; 141: pressure sensor; 142 and 143: temperature sensors; 150: alarm means; 200: engine; 210: exhaust pipe; and S100 to S700: steps of the inventive method for controlling the exhaust gas-aftertreatment device.

### [Mode for Invention]

Hereinafter, the inventive exhaust gas-aftertreatment device 100 having the above-described features and a method for controlling the same will be described in detail with reference to the accompanying drawings.

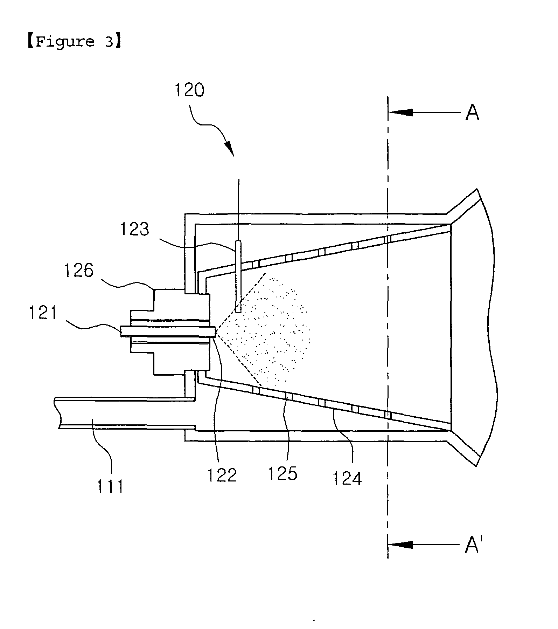

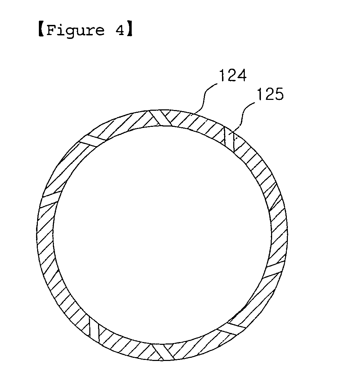

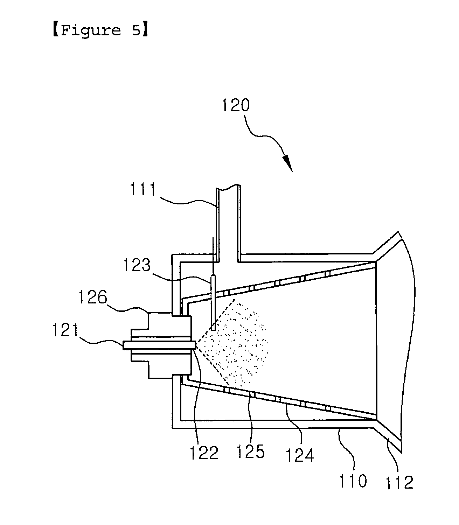

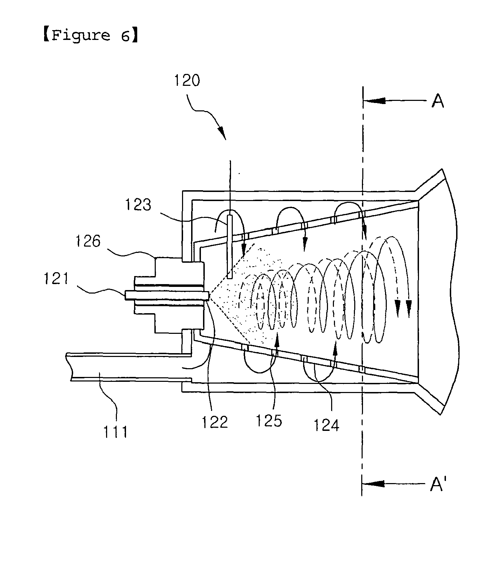

FIG. 2 is a schematic diagram showing the exhaust gas-aftertreatment device 100 according to the present invention; FIG. 3 shows a burner 120 in the exhaust gas-aftertreatment device 100 shown in FIG. 2; FIG. 4 is an A-A' cross-sectional view of FIG. 3; FIG. 5 shows another burner 120 in the exhaust gas-aftertreatment device 100 according to the present invention; and FIG. 6 is a schematic view showing the flow of fuel and exhaust gas in the exhaust gas-aftertreatment device 100 according to the present invention.

The exhaust gas-aftertreatment device 100 according to the present invention is a system for reducing exhaust gas emitted from a diesel engine 200 and largely comprises: a body 110 having an exhaust gas inlet 111 through which the exhaust gas is introduced and an exhaust gas outlet 112 through which the exhaust gas is emitted; a burner 120 for performing the active generation of a filter; a metal filter 130 for burning organic or particulate matter in the exhaust gas; and a control means 140.

The body 110 is a fundamental body forming the exhaust gas-aftertreatment device 100 of the present invention and has, on one side, the exhaust gas inlet 112 connected with an exhaust pipe 210 through which the exhaust gas emitted from the diesel engine 200 flows, and on the other side, the exhaust gas outlet 112 through which the purified exhaust gas is emitted. In the body 110, the burner 120 and the metal filter 130 are placed sequentially in the direction of flow of the exhaustion gas.

FIGS. 2 and 3 show an example in which the exhaust gas inlet 111 and the exhaust gas outlet 112 are provided at the front and rear ends of the body 110, respectively, so that the exhaust gas inlet 111, the burner 120, the metal filter 130 and the exhaust gas outlet 112 are placed sequentially in the movement direction of the exhaust gas. FIG. 5 shows an example in which the exhaust gas inlet 111 is formed at the upper portion of one side of the body, such that the exhaust gas has a stepped flow.

FIGS. 2, 3 and 5 show one embodiment of the exhaust gas-aftertreatment device 100 according to the present invention, and the body 110 may be configured in various ways, in addition to the one shown in the embodiment.

The burner 120 is an element for active regeneration and comprises a nozzle section 122 at the end thereof, a fuel injection means 121 for injecting atomized fuel, an ignition means 123, and a dispersion means 124 for guiding dispersed fuel.

The fuel injection means 121 is placed adjacent to the exhaust gas inlet 111 and has the nozzle section 122 provided therein, and thus it serves to inject atomized fuel. The amount of fuel injected is controlled by the control means 140 and influences a flame formed by the burner 120 to have a direct influence directly the temperatures of the front and rear ends of the filter.

In fuel injection by the nozzle section 122, the angle at which fuel is injected is preferably controlled to an angle of about 45-60° such that a flame is formed throughout the inside of the body 110.

The control means 140 determines the state of the system with a pressure sensor 141 placed at the front end of the exhaust gas-aftertreatment device 100 or the metal filter 130 (FIG. 2 shows an example in which the pressure sensor 141 is placed at the front end of the exhaust gas-aftertreatment device 100), two temperature sensors 142 and 143 for measuring the temperatures of the front and rear ends of the metal filter 130, the RPM sensor of the engine 200, or global positioning system (GPS) information as indicated by dotted lines in FIG. 2, and based on the determined results, transmits a control signal to the fuel injection means 121 as indicated by a solid line in FIG. 2 so as to inject a programmed amount of fuel.

FIG. 2 shows an example wherein the engine RPM, the pressure sensor 141 located at the front end of the exhaust gas-aftertreatment device 100, and two temperature sensors 142 and 143 for measuring the temperatures of the front and rear ends of the metal filters 130 are used as sources of information which is to be input to the control means 140. However, the control means 140 of the present invention may use only part of the elements shown in FIG. 2 and may further use the GPS (global positioning system) information.

Operational control by the control means 140 will now be described in detail.

Although the control of fuel injection amount by the control means 140 is not shown in the figures, pressure that is applied to a fuel pump located in a pipe connected with a fuel storage section can be minutely controlled by controlling the operation of the fuel pump, and the control of the amount of fuel injected can be performed by providing additional information from two temperature sensors 142 and 143 as feedback to be compared with a set temperature rise pattern or target value.

Also, the exhaust gas-aftertreatment device 100 of the present invention may further comprise an air injection means for injecting air into the nozzle section 122 in order to prevent the nozzle section 122 of the fuel injection means 121 from being clogged with particles contained in the exhaust gas.

Although FIGS. 3 and 5 show an example in which the air injection means 136 is provided around the fuel injection means 121 in the form of a double tube, any configuration that can inject air to prevent the clogging of the nozzle section 122 may be formed in various ways.

The air injection means 126 injects air of specific pressure at a given interval, wherein the specific pressure is preferably about 1 bar.

The exhaust gas-aftertreatment device 100 of the present invention may comprise, in place of the air injection means 126, an open/shut means (not shown) for opening and shutting the nozzle section 122 which performs the same function. More specifically, in order to prevent the nozzle section 122 from being clogged with the exhaust gas particles, the open/shut means opens the nozzle section 122 while the fuel is being injected by the fuel injection means 121, and shuts the nozzle section 122 when fuel injection ceases.

The ignition means 123 for igniting the injected fuel is heated to a surface temperature of 1200 to 1500 °C, and it is provided in such a manner that the portion to be heated comes into contact with the range of fuel injected by the fuel injection means 121. Also, it is placed so as to form a flame toward the metal filter 130 and is controlled by the control means 140.

Herein, in order to effectively increase the temperature of the exhaust gas and burn the exhaust gas, it is important to stably maintain the flame. If a large amount of exhaust gas is introduced through the exhaust gas inlet 111, the flame can become weaker, and for this reason, the exhaust gas-aftertreatment device 100 is provided with the dispersion means 124 within the burner 120.

The dispersion means 124 serves to protect the flame and to guide the fuel injected through the fuel injection means 121 and the exhaust gas introduced through the exhaust gas inlet 111 to the metal filter 130. More specifically, the dispersion means 124 has a cone shape, the diameter of which gradually becomes wider from the fuel injection means 121 in the direction of the metal filter, or a shape similar thereto. It has a plurality of openings 125.

The openings 125 are formed such that the exhaust gas introduced through the exhaust gas inlet 111 moves into the dispersion means 124 in which the flame is formed. A plurality of these openings is along the length and width directions of the dispersion means 124.

Also, as shown in FIG. 4, the openings 125 are preferably formed at an angle in the tangential direction of the dispersion means 124, such that the exhaust gas that moved into the dispersion means 124 through the openings 125 has a certain flow.

When the openings 125 are formed at an angle, the flow of the exhaust gas will create a swirling pattern (see FIG. 6). In this case, thus, the exhaust gas-aftertreatment device 100 of the present invention has an advantage in that the fuel and the exhaust gas smoothly mix and are uniformly distributed throughout the metal filter, thereby increasing the efficiency of exhaust gas reduction.

Namely, the exhaust gas-aftertreatment device 100 of the present invention comprises the dispersion means 124 which prevents the flame from coming into direct contact with the exhaust gas, such that the flame is stably formed and the degree of mixing of the exhaust gas and the fuel is increased, thereby increasing the efficiency of exhaust gas reduction.

The metal filter 130 is provided following the burner 120 and is configured to burn organic or particulate matter in the exhaust gas heated by the burner 120. It is made of Fecalloy having high temperature resistance, and the surface thereof may be heat-treated to form an oxide layer.

Herein, the surface heat-treatment is preferably carried out at a temperature of 900 to 1000 °C in an air atmosphere to form an aluminum oxide film that increases the efficiency of exhaust gas reduction.

In addition, because the metal filter 130 is exposed to high temperature because it is in direct contact with a flame, it may be coated with a catalyst capable of resisting high temperatures.

The metal filter 130 of the present invention has a low melting point but high thermal conductivity and low thermal expansion properties, compared to the prior-art ceramic filter. Because the exhaust gas-aftertreatment device 100 of the present invention employs the metal filter 130, it has an advantage in that it can increase the durability of the filter by solving the problem of the prior ceramic filter that is damaged by partial cracking or melting.

More specifically, filters made of ceramic materials such as cordierite or silicon carbide (SiC) do not have general thermal durability due to their high melting point, but have low thermal conductivity. For this reason, if the amount of exhaust gas is rapidly increased while a vehicle is running or the flow thereof becomes non-uniform such that the exhaust gas is locally excessively trapped, a certain portion of the ceramic filter will overheat and the heat will not be transferred, and thus will crack or melt at that portion.

Particularly, the overheating temperature is more than 2000 °C which is higher than the melting point of the ceramic filter and thus damages the ceramic filters. Once just if even a local portion of the ceramic filter is damaged, the flow of exhaust gas will be deflected more, and thus the durability of the ceramic filter will fall off more rapidly.

For this reason, the exhaust gas-aftertreatment device 100 of the present invention employs the metal filter 130 made of Fecalloy having high thermal conductivity, low thermal capacity and low thermal expansion properties. Thus, there is an advantage in that, even if the flow of exhaust gas is deflected so that a certain portion of the filter overheats, the heat can be rapidly transferred to the surrounding portion such that the filter can be prevented from being damaged.

Moreover, the exhaust gas-aftertreatment device of the present invention may further comprise an alarm means which is connected with the control means 140 to notify the vehicle driver of the sensed system state and emergency determined by the control means 140.

The alarm means serves to visually or acoustically notify the user of the state and may be a means which can use a visual signal such as LED or an acoustic alarm with a buzzer or recorded sound either alone or in combination. The alarm means enables the vehicle driver to directly confirm the state of the exhaust gas-aftertreatment device 100 and to more actively cope with problems that have occurred.

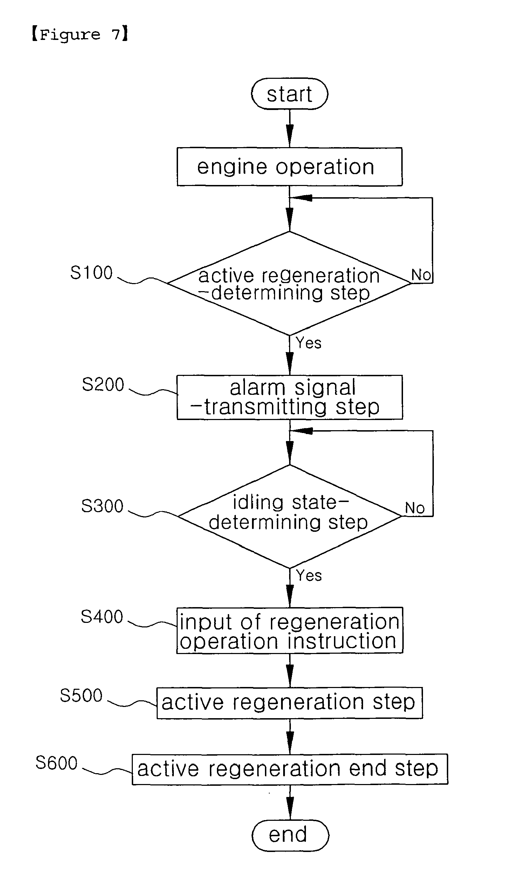

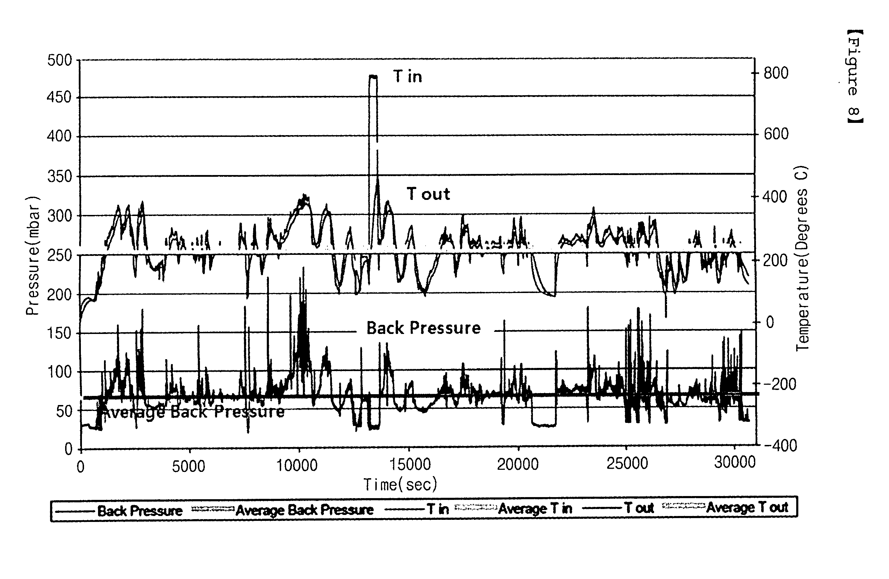

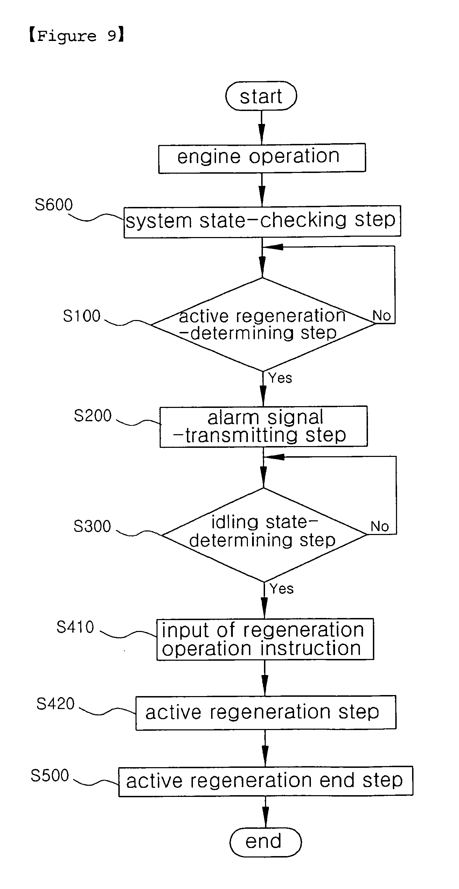

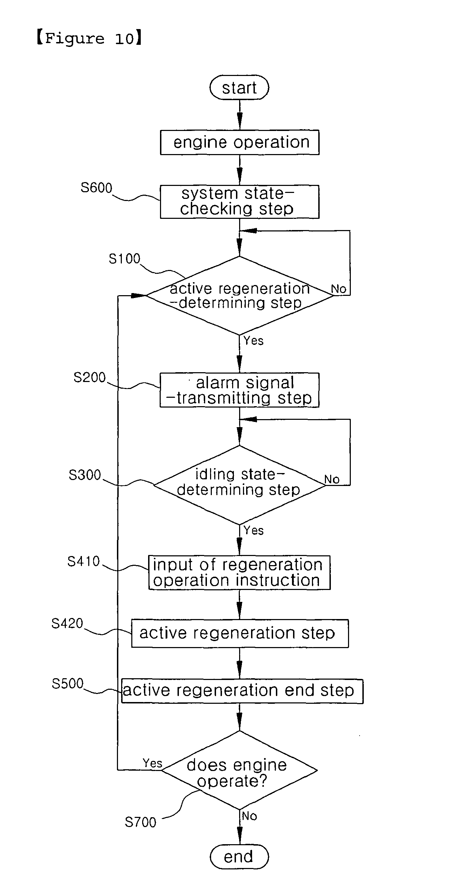

FIG. 7 is a schematic diagram showing a method for controlling the exhaust gas-aftertreatment device 100 according to the present invention; FIG. 8 is a graph showing the temperature and pressure of exhaust gas in the exhaust gas-aftertreatment device 100 according to the present invention; FIG. 9 is a schematic diagram showing another method for controlling the exhaust gas-aftertreatment device 100 according to the present invention; and FIG. 10 is a schematic diagram showing still another method for controlling the exhaust gas-aftertreatment device 100 according to the present invention.

The inventive method for controlling the exhaust gas-aftertreatment device 100 is carried out using the exhaust gas-aftertreatment device 100 and comprises: an active regeneration-determining step (S100), after the engine 200 has been put into operation; an alarm signal-transmitting step (S200); an idling state-determining step (S300); an input of instruction to do regeneration operation(S410); an active regeneration step (S420); and an active regeneration end step (S500).

The active regeneration-determining step S100 is a step for determining whether the operation of the burner 120 is required. In this step, the control means 140 determines that, if the pressure measured by the pressure sensor 141 is higher than a first pressure criteria or if an the average pressure measured by the pressure sensor 141 for a given time is higher than a second pressure, the burner 120 should be operated.

Preferably, the first pressure criteria is 150- 250 mbar, and the second pressure is 75-150 mbar.

As shown in FIG.8, because there is a great change in exhaust gas pressure and temperature when the vehicle is running, whether particulates are excessively accumulated is determined using the maximum pressure and average pressure, thereby determining whether the active regeneration of the filter is required.

In FIG. 8, T in means a value measured by two temperature sensor 142 located at the front end of the metal filter, Tₒᵤₜ means a value measured by the temperature sensor 143 located at the rear end of the metal filter, and "Back Pressure" means a value measured by the pressure sensor 141.

In the case of vehicles running at low speed, an increase in back pressure cannot be great, even if particulates are accumulated. Thus, in the active regeneration-determining step 100 in the method for controlling the exhaust gas-aftertreatment device 100 according to the present invention, at a given time after the operation of the pressure sensor 141 or the engine 200, an alarm signal can be transmitted, or the running state of the vehicle can be determined by looking at the RPM sensor of the engine 200 or GPS (Global Positioning System) information, or the amount of particulates trapped by the metal filter 130 can be calculated.

The alarm signal transmitting step (S200) is a step of notifying the vehicle driver that the operation of the burner 120 is required. This step serves to eliminate the risk of explosion caused by a flammable material, which can occur if the burner 120 is operated, during running of the vehicle, in a state in which the vehicle driver does not recognize it.

After the user have received the alarm signal, the vehicle is stopped at a safe place in which there is no risk of fire. If it is determined in the idling state-determining step (S300) that the vehicle is in an idling state, and if the user's instruction to do regeneration operationis input (S410), the burner 120 is then operated to carry out the active regeneration step (S420).

If regeneration is performed when running, the concentration of oxygen in exhaust gas is low and regeneration efficiency is low, compared to if regeneration is performed in an idling state. Also, in this case, the filter is cooled due to the weight of the vehicle to increase the consumption of energy for heating the filter to a temperature required for regeneration, and a problem of reliability arises because of the complexity of the system. For these reasons, according to the method for controlling the exhaust gas-aftertreatment device of the present invention, after it has been confirmed in the idling state-determining step (S300) that the vehicle is in an idling state, the active regeneration of the filter is performed.

In the active regeneration step (S420), the burner 120 is operated while controlling the fuel injection means 121, the ignition means 123 or the air injection means 126 by the control means 140, and the exhaust gas can be suitably heated by controlling the amount of fuel injected. Also, the amount of fuel injected is controlled by real-time analysis of the value measured by two temperature sensor 142 located at the front end of the filter.

Herein, although the particulates accumulated on the filter can be burned at a temperature of generally more than 600 °C, the temperature of the front end of the filter can be controlled to a higher temperature such that the particulates can be burned within a shorter period of time. The temperature is generally controlled to about in the range of 600 to 900 °C.

Of course, the control means 140 controls the amount of fuel injected based on the temperature measured by the temperature sensor 143 located at the rear end of the filter, and the active regeneration of the filter should be performed such that the filter is not damaged. After the active regeneration step (S420) has been performed to smoothly burn the exhaust gas, the operation of the burner 120 is stopped to end active regeneration (S500).

In addition, as shown in FIG. 9, the method for controlling the exhaust gas-aftertreatment device 100 of the present invention may further comprise a step (S600) for checking the state of the system after the engine 200 has been operated. It is preferable that the user be alerted by the alarm means of the state that is checked in the system state checking step S600.

Also, after the completion of active regeneration, the vehicle is run and generates exhaust gas, and thus the active regeneration of the filter may be required again. Accordingly, as shown in FIG. 10, in the method for controlling the exhaust gas-aftertreatment device 100 of the present invention, when the engine 200 is operated after the active regeneration step (S500), the active regeneration-determining step S100 is performed again.

As described above, the method for controlling the exhaust gas-aftertreatment device 100 according to the present invention has an advantage in that the active regeneration of the filter is achieved in a faster and safer manner, because whether the active regeneration is required is determined by understanding the information about the vehicle and because the burner 120 is operated only when the vehicle is idling.

In particular, in the prior method for controlling the exhaust gas-aftertreatment device, the types of information that can be input are the vehicle conditions, such as RPM, exhaust gas pressure and temperature, and there is a risk of fire, because it is impossible to understand the environment of the surroundings where the vehicle is located. On the contrary, in the inventive method for controlling the exhaust gas-aftertreatment device, the safety of the regeneration process is ensured, because the driver understands the surrounding environment and determines whether regeneration is required.

In addition, the user can confirm the state of the exhaust gas-aftertreatment device in real time, and the regeneration of the filter is performed under the control of the user. Thus, the risk of accidents can be reduced.

Although the preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. An exhaust gas-aftertreatment device 100 for reducing exhaust gas emission from a diesel engine 200, comprising:
a body 110 which has, on one outer side, an exhaust gas inlet 111 connected with an exhaust pipe 210 to introduce the exhaust gas into the system, and on the other side, an exhaust gas outlet 112 for emitting purified exhaust gas;
a burner 120 including a fuel injection means 121, placed adjacent to the exhaust gas inlet 111 of the body 110 and having a nozzle section 122 provided at an end thereof to inject atomized fuel, an ignition means 123 for igniting the injected fuel, and a dispersion means 124 for guiding the fuel injected through the fuel injection means 121 and the exhaust gas introduced through the exhaust gas inlet 111 to a metal filter 130;
the metal filter 130 provided at the rear end of the burner 120 to burn organic or particulate matter in the exhaust gas; and
a control means for controlling operation of the burner 120 and determining a state of the system.

2. The exhaust gas-aftertreatment device of claim 1, wherein the metal filter 130 is made of Fecalloy.

3. The exhaust gas-aftertreatment device of claim 2, wherein the surface of the metal filter 130 is heat-treated.

4. The exhaust gas-aftertreatment device of claim 3, wherein the heat treatment of the surface is carried out in an air atmosphere at a temperature of 900 to 1000 °C to form an aluminum oxide film on the surface.

5. The exhaust gas-aftertreatment device of claim 1, wherein the dispersion means 124 is designed such that the diameter thereof becomes wider from the fuel injection means 121 in a direction of the metal filter 130, and a plurality of openings 125 are formed in the dispersion means such that the exhaust gas introduced through the exhaust gas inlet 111 goes through the openings 125 to an inside of the dispersion means 124 and effectively mixes with the fuel in the dispersion means, and a flame is formed in a stable manner.

6. The exhaust gas-aftertreatment device of claim 5, wherein the openings 125 are formed at an angle in a tangential direction of the dispersion means 124, such that the exhaust gas that went through the openings 125 into the dispersion means 124 has a specific flow pattern.

7. The exhaust gas-aftertreatment device of claim 5, wherein the exhaust gas-aftertreatment device 100 further comprises an air injection means 126 for injecting air into the nozzle section 122 of the fuel injection means 121.

8. The exhaust gas-aftertreatment device of claim 5, wherein the control means 140 serves to determine the state of the system with the information provided by a pressure sensor 141 located at the front end of the exhaust gas-aftertreatment device 100 or the metal filter 130, two temperature sensors 142 and 143 measuring temperatures of front and rear ends of the metal filter 130, RPM sensor of the engine 200, or GPS (Global Positioning System) information.

9. The exhaust gas-aftertreatment device of claim 1, wherein the exhaust gas-aftertreatment device further comprises an alarm means for notifying of a sensed system state or emergency determined by the control means 140.

10. A method for controlling the exhaust gas-aftertreatment device of any one of claims 1 to 9, comprising:
an active regeneration-determining step (S100) for determining whether operation of the burner 120 is required, after operation of the engine 200;
an alarm signal-transmitting step (S200) for notifying an alarm signal to a vehicle driver with an alarm means, if it is determined in the active regeneration-determining step (S100) that operation of the burner 120 is required;
an idling state-determining step (S300) for determining whether the vehicle is in an idling state, after the alarm signal-transmitting step (S200);
an active regeneration step (S420) for operating the burner 120 to perform active regeneration, if it is determined in the idling state-determining step (S300) that the vehicle is in the idling state and if a user's instruction to do regeneration operation (S410) is input; and
an active regeneration end step (S500) for stopping the burner 120 to end the active regeneration, after performing the active regeneration step (S420).

11. The method of claim 10, wherein it is determined in the active regeneration-determining step (S100) that, if a pressure measured by a pressure sensor 141 is higher than a first pressure criteria or if an average pressure measured by the pressure sensor 141 for a specific period of time is higher than a second pressure criteria, the burner 120 should be operated.

12. The method of claim 11, wherein the first pressure criteria is 150-250 mbar, and the second pressure criteria is 75-150 mbar.

13. The method of claim 11, wherein the method further comprises a system state-checking step (S600) for checking the state of the system, after the operation of the engine.

14. The method of claim 13, wherein the active regeneration-determining step (S100) is performed again when the engine 200 is operated after the active regeneration end step (S500).

15. The method of claim 10, wherein the amount of fuel injected into the burner 120 in the active regeneration step is controlled such that a temperature of a front end of the metal filter 130 is in the range of 600 to 900 °C.
